# EUROPEAN PATENT SPECIFICATION

(11) **EP 3 505 326 B1**
(45) Date of publication and mention of the grant of the patent: **19.06.2024**
(21) Application number: 19150115.4
(22) Date of filing: 02.01.2019
(51) Int. Cl.: B29C 59/00, B26D 3/08, B26D 7/27, B60R 21/2165

(54) **APPARATUS FOR ENGRAVING WEAKENING LINES AND RELATED PROCESS**
VORRICHTUNG ZUM GRAVIEREN VON SCHWÄCHUNGSLINIEN UND ZUGEHÖRIGES VERFAHREN
DISPOSITIF POUR GRAVER DES LIGNES D'AFFAIBLISSEMENT ET PROCÉDÉ ASSOCIÉ

(30) Priority: 02.01.2018 IT 201800000252
(43) Date of publication of application: 03.07.2019
(73) Proprietor: AutomationsRobotic GmbH, 84323 Massing (DE)
(72) Inventor: BERGAMIN, Fabio, I-20823 Lentate sul Seveso (MB) (IT)
(74) Representative: Pescher, Manuel Dirk

(56) References cited:
- EP-A1- 1 621 415
- EP-A2- 1 693 726
- DE-A1-102007 049 849
- DE-B3-102006 034 287
- US-A1- 2015 059 143

## Description

The present invention relates to an apparatus for engraving weakening lines on flexible materials intended for forming airbag covers and to a related cutting process.

The invention is preferably applicable in the sector of cutting upholstery materials intended for covering dashboards, doors and elements of a vehicle in which airbag devices are installed.

Airbags are usually coupled to an underlying plastic bearing and covered (for aesthetic reasons) by an upholstery material of various kinds (e.g. synthetic leather and similar plastic sheets).

The materials normally used include, for example, elastomers based on polyurethane, PVC, thermoplastic elastomers and the like.

For the purpose of allowing the correct opening of the airbag, it is necessary to provide weakening lines in the upholstery material, at which the upholstery is intended to break upon the exit of the airbag membrane; this allows the airbag to be correctly directed towards the passenger to be protected and to comply with the technical opening times.

The weakening lines are made on the upholstery material through scoring (not through cuts) that leave at the engraved line itself a specific residual thickness of uncut material, which is less than the total thickness of the upholstery material.

Such residual (uncut) thickness has a direct impact on the exit speed and method of the airbag and therefore directly influences the safety of the vehicle; in fact, it is intuitive that a residual thickness that is too high can cause the failed or incorrect exit of the airbag membrane; in the event in which the residual thickness were lower than that established in the design, the damage would - potentially - be even greater; in fact the membrane (encountering lower resistance than the design resistance) would exit at the wrong time, with the risk not only of making the presence of the airbag futile, but also causing serious damage to the passenger.

To have maximum precision in the residual thickness the use of automatic cutting machines is known, for example robots with a high degree of repeatability, that move a cutting tool with respect to a support, i.e. a bearing on which the upholstery material for scoring is to be positioned; the support is equipped with devices for securing the upholstery: in a known example, the support is a bearing (variously shaped) provided with a resting surface for the upholstery, to which a plurality of suction conduits lead, connected to a pump or the like. Once positioned on the support, the upholstery is securely retained there by suction.

In order to guarantee the correctness of the process, measurement checks of the residual thickness must be performed for every engraved line, the results of which checks are then documented in order to certify the correct performance of the engraved lines for each upholstery material.

In this sense, recording measurements of residual thicknesses in determined check points through different systems from the robot that performed the engraved line are known, in order to guarantee the reliability of the check.

To perform these check and verification measurements, different devices have been developed over time: in one example a sensor is used mounted on the cutting tool that measures the distance between the latter and the support.

In this solution, the cutting tool, provided with a cutting edge, bears a sensor, usually mounted side by side to the cutting edge, which measures the distance (from the sensor) to the support, thus approximating the distance between the cutting edge and the support.

However, this solution, though functional, does have some limitations.

In the first place, the measured distance is not exactly the one between the distal part of the cutting edge and the support, but only an approximation thereof: since this distance equates to the considered as residual thickness, this inevitably entails measurement errors.

These errors are more evident if one considers that the support usually does not have a flat shape, but is variously shaped to conform to the shapes of the dashboard or - more generally - of the part of automobile where the flexible bearing being processed will be mounted.

An additional limit is tied to the fact that known apparatuses cannot take into consideration, in the measurement, a possible wear of the cutting edge, whose distal end becomes shorter, as it wears down.

For correct understanding, the small size of the errors permitted in the measurement/verification of the residual material thicknesses is kept in consideration, which is usually in the order of tens, if not thousandths, of a millimeter.

Another limit is tied to the fact that the sensors currently used are the inductive ones: the support must then be made so as to be detectable by the inductive sensor, hence of metal.

Document EP 1 621 415 A1 discloses an apparatus according to the preamble of claim 1 and a method according to the preamble of claim 5.

The main task of the present invention consists of realising an apparatus and a related process for engraving weakening lines of flexible materials intended to form covers of airbags that solves the technical problem set out above, obviates the drawbacks and overcomes the limits of the prior art, allowing a technique to be provided able to perform highly precise measurements.

An additional purpose of the invention is to realise an apparatus and a related process for engraving weakening lines that is able to avoid approximations in the measurement.

An additional purpose of the invention is to realise an apparatus and a related process for engraving weakening lines that is able to take into consideration the wear of the cutting edge.

A further purpose of the invention is to realise an apparatus and a related process for engraving weakening lines that is relatively easy to realise and economically competitive compared with the prior art.

The task set forth above, as well as the aforementioned purposes and others that will be more readily apparent below, are achieved by an apparatus for engraving weakening lines of flexible materials intended to form covers of airbags according to claim 1.

An additional object of the invention is a process as described below.

Thus it is possible to achieve the objects identified above, as the invention makes it possible to verify that the residual thickness of the uncut material is consistent with the design choices.

Additional features and advantages will become more apparent from the description of a preferred, but non-exclusive embodiment of an apparatus that realises the process of the invention, illustrated by way of non-limiting example with the aid of the appended drawings, in which:

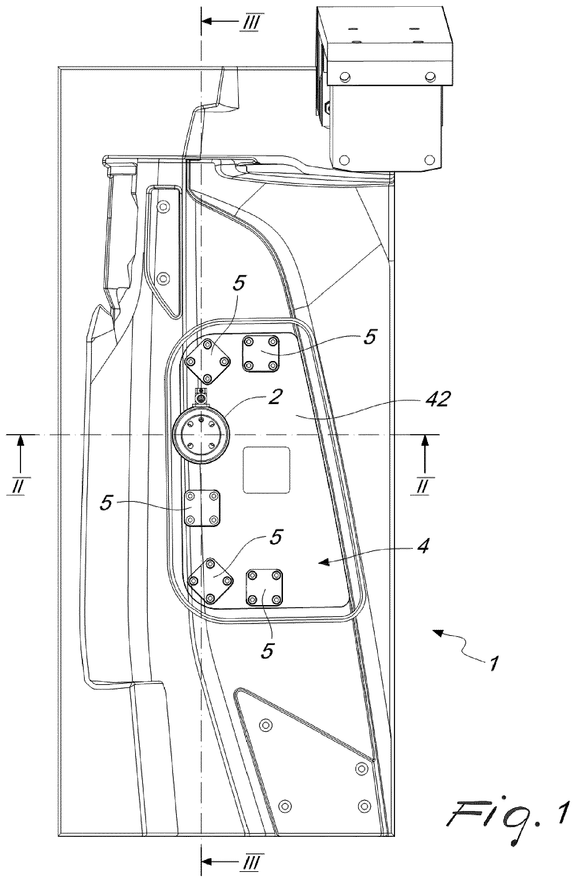

figure 1 is a top plan view of an embodiment of an apparatus according to the invention, with the section planes A-A and B-B are highlighted;

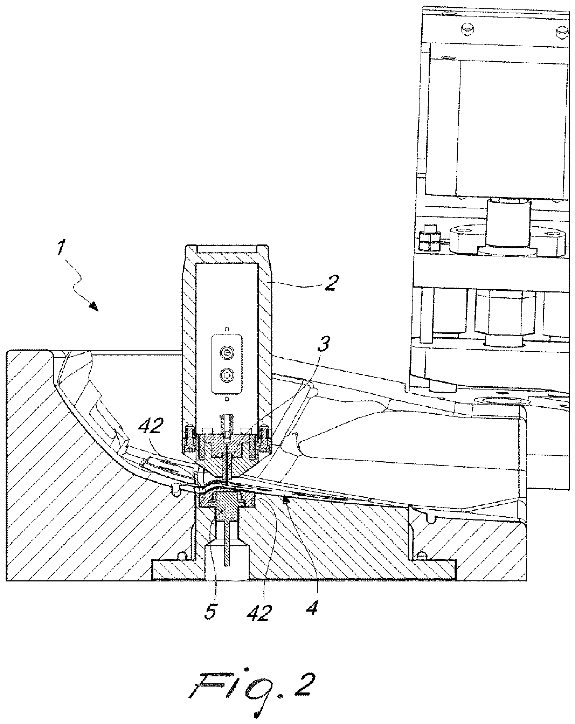

figure 2 is a section view along the plane B-B of the apparatus of figure 1;

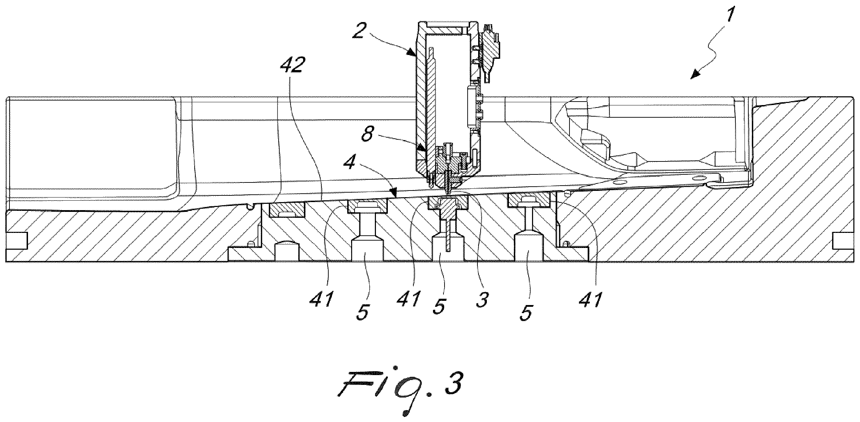

figure 3 is a section view along the plane A-A of the apparatus of figure 1;

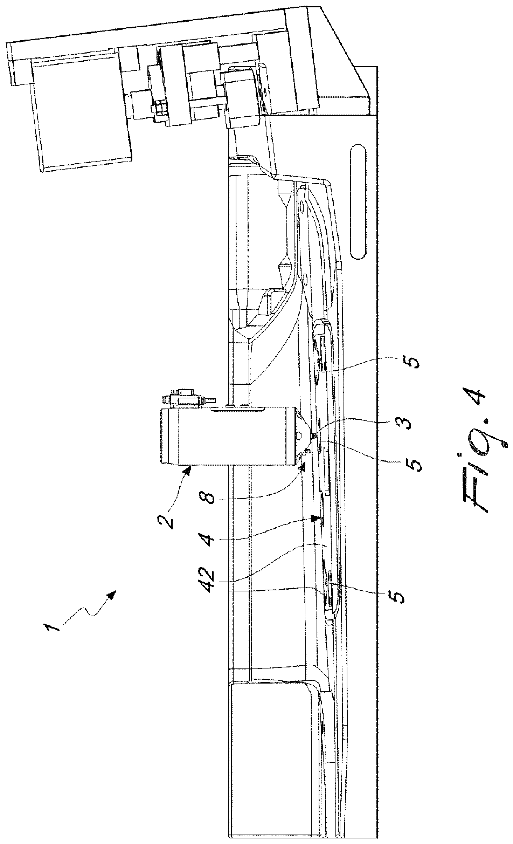

figure 4 is a lateral view of the apparatus of fig. 1;

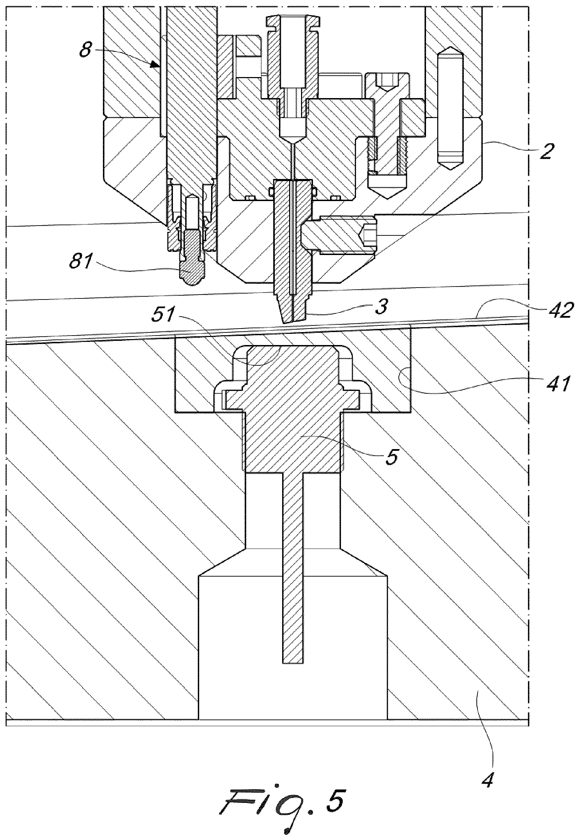

figure 5 is a detailed view of a detail of fig. 3.

Before describing the process according to the invention, for clarity purposes, it is worth describing the apparatus 1 in its non-limiting embodiment of the accompanying figures.

With reference to the figures, they show an apparatus for engraving weakening lines of flexible materials intended to form airbag covers, indicated in its entirety with the numerical reference 1.

The apparatus 1 is shown lacking parts that are not fundamental to understand the invention, for example lacking the frame, the motors and the actuating means of the cutting head (for example, robot arms, portal structures or the like), because they are known to the person skilled in the art and not useful for the purposes of the present description.

The apparatus 1 comprises a cutting head 2 in turn provided with a cutting edge 3, for example a cutting blade.

The cutting edge 3 is mounted integral with the head 2, so that when it is displaced the cutting edge 3 follows it in its displacement; the cutting edge 3 is preferably replaceable, so that it can be changed when its wear conditions make it appropriate.

The apparatus 1 then comprises a support 4 for the flexible material; the support 4 comprises an outer surface 42 variously shaped in space, so as to adapt to the different shapes of the flexible materials that in turn are specifically made so as to adapt to the dashboards, to the doors or to other parts of a vehicle on which they will be mounted.

The support 4 optionally comprises a device for holding in position the sheet of flexible material, for example a suction device, that creates a vacuum between sheet and outer surface 42; this device for holding in position comprises for example a plurality of micro-holes and/or a perimetral gasket and suction holes that open on the surface 42. This solution is generally known in itself in the technical sector and it will not be discussed any further.

The cutting head 2 is movable with respect to the support 4 so as to follow a cutting trajectory for engraving the weakening lines on the sheet of flexible material being processed.

For this purpose, the head 2 could be mounted on a robot arm or on a frame, for example a portal frame, that is motorised, not shown in the accompanying figures.

According to the invention, the apparatus 1 comprises at least two proximity sensors 5 integral with the support 4 and arranged along said cutting trajectory, each configured to measure the distance between it and the cutting edge 3.

In this way it is possible to measure, by sampling, the distance between the distal end of the cutting edge 3 and the support 4, representatives of the residual (uncut) thickness of the sheet of material.

In the preferred case, illustrated herein, there are six proximity sensors 5 provided in different positions along the cutting trajectory; in other embodiments there are three, four, or a different number, even higher than six: the number of the proximity sensors 5 is established as a function of different operating parameters selected on the basis of the characteristics of the individual operation to be performed (for example, complexity of the cutting trajectory, length thereof, type of material, etc.); to a higher number of proximity sensors 5 corresponds a higher number of control point, so that in theory it is advantageous to increase the number up to a maximum, allowed by size and costs.

Preferably, the cutting edge 3 is metallic and the proximity sensors 5 are inductive sensors.

These sensors 5 are able to measure the distance between their terminal detection end 51 and a metallic object, in this case the distal portion (or terminal end) of the cutting edge 3.

In theory, equivalently, the sensors 5 could be capacitive or magnetic sensors, able to detect the metal of the cutting edge through the layer of (non-metallic) material being processed.

The support 4 comprises housing seats 41, recessed with respect to the outer surface 42 for supporting the flexible material on the support 4; in the seats 41 are housed the sensors 5, so as not to interfere with the cutting or engraving operation.

Preferably, to make the measurement even more precise (as well as to avoid interference of any type) the terminal detection end 51 of each proximity sensor 5 is substantially flush with said outer surface 42 of the support 4; between the terminal detection end 51 and the cutting edge 3 is not interposed any metallic element and more preferably any element in general, so as not to distort the measurement of the sensor 5.

The cutting head 2 comprises a feeler device 8.

The feeler device 8 comprises a movable measurement rod 81 that extends substantially parallel to the cutting edge 3 and allows to take a measurement by means of contact.

Said feeler device 8 is used for example in a step of preliminary calibration of the apparatus 1: in this step the head 2 follows the cutting trajectory on the support 4 (in the absence of material to be cut) and the feeler follows the same path that would be followed by the cutting edge in working condition.

Since the feeler device 8 is mechanically actuated and measure by means of contact, it, in the path followed in the calibration step, moves with the (metallic) head of the rod 81 of the feeler 8 in (sliding) contact with the surface of the support 4.

When the feeler 8 passes by a sensor 5, the latter measures the distance with the (metallic) head of the rod 81 of the feeler 8.

Since the (metallic) head of the rod 81 of the feeler 8 is certainly in contact with the support 4 (for the aforesaid reasons), each sensor 5 measures the respective distance DF with respect to the surface of the support 4 itself, i.e. a calibration measurement DF for each sensor 5.

Said calibration measurement (physical distance, DF) is stored by the apparatus (preferably by its control unit) and subtracted from each measurement taken (measured distance, DM) by the sensor that is carried out during an operating step of cutting.

This result is the real thickness SR of residual material that remains in the engraving operation or the real distance that exists between the surface of the support and the tip of the cutting edge and hence the real (not approximate) thickness of the material actually cut.

In essence, SR=DM-DF.

Preferably aboard the apparatus 1 is present a control unit, in operating communication with the proximity sensors 5 for the transmission of data representative of measurements carried out during the cutting or engraving step: optionally, the control unit is also in communication with the feeler device 8, if present.

Preferably the control unit comprises a comparing device, able to compare the measurements taken by the sensors 5 with pre-set reference measurements, so as to identify whether the measured residual thickness is compatible with the design thickness and to validate (or not) the operation of engraving the weakening lines.

In the final analysis, this allows to take sampled measurements (at each sensor) of the residual thickness of the sheet of material at portions of the cutting trajectory.

The operation of the invention, and the process thereof comprise at least the steps of:
a. arranging a sheet of a flexible material
b. locking said sheet of flexible material in position on a support 4 of an engraving apparatus 1, preferably of the type described above,
c. engraving weakening lines on said sheet of flexible material using a cutting edge 3 that progresses along a cutting trajectory
d. measuring a residual thickness of the sheet of flexible material not cut by the cutting edge 3; according to the invention said measurement step d. comprises at least two measuring phases of a distance between a distal end of the cutting edge 3 and the support 4, each measuring phase being made at a different section of said cutting trajectory.

The method then provides for each measuring phase to be carried out by means of a proximity sensor 5 integral with the support 4, still more preferably by means of an inductive sensor.

A feeler device 8 is provided on the apparatus 1 and the process comprises a preliminary calibration step, carried out before the phase a. (i.e. before the phase a. belonging to a cutting operation or to a multiplicity of cutting operations) which comprises the phases of:
i. moving the feeler along the cutting trajectory in the absence of flexible material being processed,
ii. measuring by means of a proximity sensor 5 integral with the support 4 the physical distance DF with respect to the feeler 8 at the same sections of said cutting trajectory with respect to which the measurement referred to in d. takes place,
iii. storing said physical distance (DF) values of phase ii.

If said preliminary calibration step is provided, the process further comprises a step for calculating the real thickness SR of residual material not cut, in which calculation step the real thickness is calculated, for each section of said cutting trajectory with respect to which the measurement referred to in d. takes place, said real thickness SR being equal to SR=DM-DF, where DM is the distance measured for each sensor 5 at d. of the process and DF the physical distance measured by the feeler at phase ii.

From the above description, it is noted that with respect to the state of the art, where the measurement of the residual thickness was inferred on the basis of an indirect measurement (between head and support), in the case of the invention the measurement instead is a direct measurement, which determines the distance between the distal end of the cutting edge and the support.

Moreover, the measurement of the residual thickness takes place simultaneously with the cutting edge, i.e. during the passage of the cutting edge on the material, so as to avoid subsequent checking or verification operations that could entail wasted time and/or additional measurement errors.

This allows to avoid (or limit) measurement errors tied to the shape of the support and/or to the wear of the tool.

In practice, it has been noted how the invention described herein and claimed below fulfils the task and the predefined objects as it allows the objects predefined above to be reached.

The invention as it is conceived is susceptible to numerous modifications and variants, all falling within the scope of the inventive concept.

Moreover, all details can be replaced with other technically equivalent elements.

In practice, the materials used, provided they are compatible with the specific use, as well as the contingent dimensions and shapes, may be any depending on the needs.

## Claims

1. Apparatus (1) for engraving the weakening lines of flexible materials intended to form airbag covers, comprising:
a cutting head (2) provided with a cutting edge (3),
a support (4) for the flexible material,
the cutting head (2) being movable with respect to the support (4) so as to follow a cutting trajectory for the engraving of said weakening lines on the flexible material being processed,
wherein
the apparatus (1) comprises at least two proximity sensors (5) integral with the support (4) and arranged along said cutting trajectory, each configured to measure the distance between it and the cutting edge (3)
**characterized**
**in that** said support (4) comprises housing seats (41) recessed with respect to an outer surface (42) for supporting the flexible material on the support (4), said at least two proximity sensors (5) being mounted in said housing seats (41) and
**in that** the cutting head (2) comprises a feeler device (8) comprising a moveable measurement rod (81) that extends substantially parallel to the cutting edge (3) and allows to take a measurement by means of contact.

2. Engraving apparatus (1) according to claim 1, wherein said cutting edge (3) is made of metal and said at least two proximity sensors (5) are inductive sensors.

3. Engraving apparatus (1) according to claim 1, wherein a detection end (51) of each proximity sensor (5) is substantially flush with said outer surface (42) of the support (4).

4. Engraving apparatus (1) according to one or more of the preceding claims, comprising a control unit, said proximity sensors (5) being operatively connected to said control unit at least for the transmission of data representative of measurements made.

5. Process for engraving the weakening lines of flexible materials intended to form airbag covers, comprising the steps of:
a. arranging a sheet of a flexible material
b. locking said sheet of flexible material in position on a support (4) of an engraving apparatus (1)
c. engraving weakening lines on said sheet of flexible material using a cutting edge (3) that progresses along a cutting trajectory
d. measuring a residual thickness of the sheet of flexible material which has not been cut by the cutting edge (3)
wherein
said measurement step d. comprises at least two measuring phases of a distance between a distal end of the cutting edge (3) and said support (4), each measuring phase being made at a different section of said cutting trajectory,
wherein each measuring phase is carried out by means of a proximity sensor (5) integral with said support (4),
**characterized in that** said
method comprising a preliminary calibration step, carried out before step a., said preliminary calibration step comprising the phases of:
i. moving a feeler (8) along the cutting trajectory in the absence of flexible material being processed,
ii. measuring by means of the proximity sensor (5) integral with the support (4) a physical distance (DF) with respect to the feeler (8) at the same sections of said cutting trajectory with respect to which the measurement referred to in d. takes place,
iii. storing said physical distance (DF) values of phase ii.

6. Process according to claim 5, comprising a step for calculating the real thickness (SR) of residual material not cut, in which calculation step said real thickness (SR) is calculated, for each section of said cutting trajectory with respect to which the measurement referred to in d. takes place, said real thickness (SR) being equal to SR = DM-DF, where DM is the distance measured for each sensor (5) at d. of the process and DF the physical distance measured by the feeler at phase ii.

7. Process according to one or more of claims 5 or 6, **characterised in that** it is carried out in an engraving apparatus (1) according to one or more of claims 1 to 6.

## Patentansprüche

1. Vorrichtung (1) zum Gravieren der Schwächungslinien von flexiblen Materialien, die zur Bildung von Airbagabdeckungen bestimmt sind, aufweisend:
einen Schneidkopf (2), der mit einer Schneidkante (3) versehen ist,
einen Träger (4) für das flexible Material,
wobei der Schneidkopf (2) in Bezug auf den Träger (4) beweglich ist, um einer Schneidbahn für die Gravur der Schwächungslinien auf dem zu bearbeitenden flexiblen Material zu folgen,
wobei die Vorrichtung (1) mindestens zwei Näherungssensoren (5) aufweist, die mit dem Träger (4) integral ausgebildet sind und entlang der Schneidbahn angeordnet sind, wobei jeder konfiguriert ist, um den Abstand zwischen ihm und der Schneidkante (3) zu messen,
**dadurch gekennzeichnet, dass** der Träger (4) Gehäusesitze (41) aufweist, die in Bezug auf eine äußere Oberfläche (42) zum Tragen des flexiblen Materials auf dem Träger (4) vertieft sind, wobei die mindestens zwei Näherungssensoren (5) in den Gehäusesitzen (41) montiert sind, und
dadurch, dass der Schneidkopf (2) eine Fühlervorrichtung (8) aufweist, die einen beweglichen Messstab (81) aufweist, der sich im Wesentlichen parallel zu der Schneidkante (3) erstreckt und es ermöglicht, eine Messung mittels Kontakt durchzuführen.

2. Vorrichtung (1) zum Gravieren nach Anspruch 1, wobei die Schneidkante (3) aus Metall besteht und die mindestens zwei Näherungssensoren (5) induktive Sensoren sind.

3. Vorrichtung (1) zum Gravieren nach Anspruch 1, wobei ein Erfassungsende (51) jedes Näherungssensors (5) im Wesentlichen mit der Außenfläche (42) des Trägers (4) bündig ist.

4. Vorrichtung (1) zum Gravieren nach einem oder mehreren der vorhergehenden Ansprüche, mit einer Steuereinheit, wobei die Näherungssensoren (5) mit der Steuereinheit zumindest zur Übertragung von Daten, die für die durchgeführten Messungen repräsentativ sind, in Wirkverbindung stehen.

5. Verfahren zum Gravieren der Schwächungslinien von flexiblen Materialien, die zur Bildung von Airbagabdeckungen bestimmt sind, umfassend die folgenden Schritte:
a. Anordnen einer Folie aus einem flexiblen Material
b. Arretieren des Bogens aus flexiblem Material auf einem Träger (4) einer Vorrichtung (1) zum Gravieren
c. Gravieren von Schwächungslinien in die Platte aus flexiblem Material mit einer Schneide (3), die sich entlang einer Schneidebahn bewegt
d. Messen einer Restdicke des Blattes aus flexiblem Material, das nicht von der Schneidkante (3) geschnitten wurde, wobei der Messschritt d. mindestens zwei Messphasen eines Abstands zwischen einem distalen Ende der Schneidkante (3) und dem Träger (4) aufweist, wobei jede Messphase an einem unterschiedlichen Abschnitt der Schneidbahn durchgeführt wird, wobei jede Messphase mittels eines mit dem Träger (4) integrierten Näherungssensors (5) ausgeführt wird, **dadurch gekennzeichnet, dass** das Verfahren einen vorbereitenden Kalibrierungsschritt umfasst, der vor Schritt a. ausgeführt wird, wobei der vorbereitende Kalibrierungsschritt die folgenden Phasen umfasst:
i. Bewegen eines Fühlers (8) entlang der Schneidebahn in Abwesenheit des zu bearbeitenden flexiblen Materials,
ii. Messen eines physikalischen Abstands (DF) mittels des mit dem Träger (4) fest verbundenen Näherungssensors (5) in Bezug auf den Fühler (8) in denselben Abschnitten der Schneidbahn, in Bezug auf die die in d. genannte Messung stattfindet,
iii. Speicherung der physikalischen Abstandswerte (DF) der Phase ii.

6. Verfahren nach Anspruch 5, das einen Schritt zur Berechnung der tatsächlichen Dicke (SR) des nicht geschnittenen Restmaterials aufweist, wobei in diesem Berechnungsschritt die tatsächliche Dicke (SR) für jeden Abschnitt der Schneidebahn, in Bezug auf den die in d. genannte Messung stattfindet, berechnet wird, wobei die tatsächliche Dicke (SR) gleich SR = DM-DF ist, wobei DM der für jeden Sensor (5) bei d. des Verfahrens gemessene Abstand und DF der durch den Fühler in Phase ii gemessene physikalische Abstand ist.

7. Verfahren nach einem oder mehreren der Ansprüche 5 oder 6, **dadurch gekennzeichnet, dass** es in einer Graviervorrichtung (1) nach einem oder mehreren der Ansprüche 1 bis 6 durchgeführt wird.

## Revendications

1. Appareil (1) pour graver les lignes de faiblesse de matériaux souples destinés à former des couvertures d'airbags, comprenant:
une tête de coupe (2) munie d'une arête de coupe (3),
un support (4) pour le matériau souple,
la tête de coupe (2) étant mobile par rapport au support (4) de manière à suivre une trajectoire de coupe pours la gravure desdites lignes d'affaiblissement sur le matériau souple en cours de traitement, dans lequel l'appareil (1) comprend au moins deux capteurs de proximité (5) solidaires du support (4) et disposés le long de ladite trajectoire de coupe, chacun configuré pour mesurer la distance qui le sépare de l'arête de coupe (3)
**caractérisé en ce que** ledit support (4) comprend des sièges de logement (41) évidés par rapport à une surface extérieure (42) pour supporter le matériau souple sur le support (4), lesdits au moins deux capteurs de proximité (5) étant montés dans lesdits sièges de logement (41) et **en ce que** la tête de coupe (2) comprend un dispositif de palpage (8) comprenant une tige de mesure mobile (81) qui s'étend sensiblement parallèlement à l'arête de coupe (3) et permet d'effectuer une mesure par contact.

2. Appareil (1) pour graver selon la revendication 1, dans lequel ladite arête de coupe (3) est en métal et lesdits au moins deux capteurs de proximité (5) sont des capteurs inductifs.

3. Appareil (1) pour graver selon la revendication 1, dans lequel une extrémité de détection (51) de chaque capteur de proximité (5) est sensiblement au même niveau que ladite surface extérieure (42) du support (4).

4. Appareil (1) pour graver selon l'une ou plusieurs des revendications précédentes, comprenant une unité de commande, lesdits capteurs de proximité (5) étant reliés de manière opérationnelle à ladite unité de commande au moins pour la transmission de données représentatives des mesures effectuées.

5. Procédé de gravure des lignes d'affaiblissement de matériaux souples destinés à former des housses d'airbags, comprenant les étapes suivantes:
a. disposition d'une feuille d'un matériau flexible
b. bloquer ladite feuille de matériau souple en position sur un support (4) d'un appareil de gravure (1)
c. graver des lignes d'affaiblissement sur ladite feuille de matériau souple à l'aide d'une arête de coupe (3) qui progresse le long d'une trajectoire de coupe
d. mesurer une épaisseur résiduelle de la feuille de matériau souple qui n'a pas été découpée par l'arête de coupe (3) dans laquelle ladite étape de mesure d. comprend au moins deux phases de mesure d'une distance entre une extrémité distale de l'arête de coupe (3) et ledit support (4), chaque phase de mesure étant effectuée à une section différente de ladite trajectoire de coupe, dans laquelle chaque phase de mesure est effectuée au moyen d'un capteur de proximité (5) solidaire dudit support (4), **caractérisé en ce que** ledit procédé comprend une étape d'étalonnage préliminaire, effectuée avant l'étape a., ladite étape d'étalonnage préliminaire comprenant les phases de:
i. déplacer un palpeur (8) le long de la trajectoire de coupe en l'absence de matériau souple en cours de traitement,
ii. mesurer au moyen du capteur de proximité (5) solidaire du support (4) une distance physique (DF) par rapport au palpeur (8) aux mêmes endroits de ladite trajectoire de coupe par rapport auxquels s'effectue la mesure visée en d.,
iii. stocker les valeurs de distance physique (DF) de la phase ii.

6. Procédé selon la revendication 5, comprenant une étape de calcul de l'épaisseur réelle (SR) du matériau résiduel non coupé, dans laquelle on calcule, pour chaque section de ladite trajectoire de coupe par rapport à laquelle la mesure visée en d. a lieu, ladite épaisseur réelle (SR) étant égale à SR = DM-DF, où DM est la distance mesurée pour chaque capteur (5) en d. du procédé et DF la distance physique mesurée par le palpeur en phase ii.

7. Procédé selon l'une ou plusieurs des revendications 5 ou 6, **caractérisé en ce qu'**il est mis en oeuvre dans un appareil de gravure (1) selon l'une ou plusieurs des revendications 1 à 6.
